# EUROPEAN PATENT APPLICATION

(11) **EP 4 692 877 A1**
(43) Date of publication of application: **11.02.2026**
(21) Application number: 24830187.1
(22) Date of filing: 10.05.2024
(51) Int. Cl.: G02B 6/38, G02B 6/08

(54) **OPTICAL FIBER CONNECTOR AND OPTICAL SPLITTER**

(30) Priority: 30.06.2023 CN 202310802083
(71) Applicant: Huawei Technologies Co., Ltd., Shenzhen, Guangdong 518129 (CN)
(72) Inventor: LI, Feng, Shenzhen, Guangdong 518129 (CN); GAO, Xinxia, Shenzhen, Guangdong 518129 (CN)
(74) Representative: MERH-IP Matias Erny Reichl Hoffmann Patentanwälte PartG mbB
(86) International application number: PCT/CN2024/092428
(87) International publication number: WO 2025/001539

(57) **Abstract**

An optical fiber connector and an optical splitter are provided, and pertain to the field of optical communication technologies. The optical fiber connector (0) includes a housing (01) and a plurality of optical fibers (02) arranged in parallel. The housing (01) encloses the plurality of optical fibers (02), and end faces at both ends of the optical fibers (02) are exposed outside the housing (01). A part that is of at least one of the plurality of optical fibers (02) and that is enclosed by the housing (01) is provided with a grating (021), and when at least two optical fibers (02) in the at least one optical fiber (02) are provided with gratings, the gratings (021) on the at least two optical fibers (02) are different from each other. A grating (021) on at least one optical fiber (02) is provided on a part that is of the optical fiber (02) and that is enclosed by the optical fiber connector (0). During preparation of the optical fiber connector (0), a process of stripping the optical fiber and packaging the optical fiber connector (0) with the housing (01) needs to be performed. Therefore, an operation of providing the grating (021) on the optical fiber (02) can be implemented during preparation of the optical fiber connector (0), to avoid a problem of low efficiency caused by preparing and packaging the grating (021) in a process other than preparation of the optical fiber connector (0).

## Description

This application claims priority to Chinese Patent Application No. 202310802083.5, filed on June 30, 2023, and entitled "OPTICAL FIBER CONNECTOR AND OPTICAL SPLITTER", which is incorporated herein by reference in its entirety.

### TECHNICAL FIELD

This application relates to the field of optical communication technologies, and in particular, to an optical fiber connector and an optical splitter.

### BACKGROUND

An optical communication technology relies on an optical fiber to transmit an optical signal for communication. However, the optical fiber is vulnerable to damage. When the optical fiber is damaged, the optical fiber cannot effectively transmit the optical signal, and consequently, optical communication is affected to some extent. Therefore, it is important to identify an optical fiber port to determine a degraded optical fiber.

In the related technology, gratings are separately provided on a plurality of optical fibers, and wavelengths of optical signals reflected by gratings on different optical fibers are different. To identify ports of a plurality of optical fibers, optical signals of a plurality of wavelengths may be transmitted to the optical fibers through a wavelength-tunable optical time domain reflectometer (optical time domain reflectometer, OTDR). Then, optical signals reflected by the gratings on the optical fibers are received from the ports, to identify the ports of the optical fibers based on wavelengths of the optical signals. When an optical fiber is damaged, an optical signal sent by the OTDR cannot be transmitted to a grating on the optical fiber, and therefore, the OTDR cannot receive an optical signal reflected by the grating. Therefore, it may be determined that the optical fiber is damaged, and a port fault of the optical fiber is determined, to complete detection of optical fiber damage.

However, in the related technology, efficiency of providing a grating is low.

### SUMMARY

This application provides an optical fiber connector and an optical splitter, to resolve a problem of low efficiency of providing a grating in a related technology. The technical solutions are as follows:

According to a first aspect, this application provides an optical fiber connector. The optical fiber connector includes a housing and a plurality of optical fibers arranged in parallel. The housing encloses the plurality of optical fibers, and end faces at both ends of the optical fibers are exposed outside the housing. A part that is of at least one of the plurality of optical fibers and that is enclosed by the housing is provided with a grating, and when the at least one optical fiber includes at least two optical fibers, gratings on the at least two optical fibers are different from each other.

It can be learned from the foregoing content that in this application, a grating on at least one optical fiber is provided on a part that is of the optical fiber and that is enclosed by the optical fiber connector. During preparation of the optical fiber connector, a process of stripping the optical fiber and packaging the connector with the housing needs to be performed. Therefore, grating preparation and optical fiber grating packaging protection can be implemented synchronously during preparation of the optical fiber connector, to avoid a problem of low efficiency caused by optical fiber stripping and grating packaging in a process other than preparation of the optical fiber connector. In addition, when the at least one optical fiber includes the plurality of optical fibers, it is not necessary to provide a grating on a part outside the optical fiber connector, and it is not necessary to provide a packaging box on a ribbon fiber to protect the gratings on the optical fibers. Therefore, the grating packaging box does not affect preparation efficiency of the optical fiber connector. In addition, an automation level of preparing the optical fiber connector is usually higher than an automation level of preparing and packaging the gratings on the ribbon fiber. Therefore, manual dependency can be reduced. It can be learned that the optical fiber connector provided in this application has a similar function as an assembly including an optical fiber connector and a ribbon fiber with a grating in the related technology. However, the preparation efficiency of the optical fiber connector in this application is higher than preparation efficiency of the assembly including the optical fiber connector and the ribbon fiber with a grating in the related technology, and preparation costs of the optical fiber connector in this application are lower than preparation costs of the assembly including the optical fiber connector and the ribbon fiber with a grating in the related technology.

The housing may have a plurality of implementations. For example, the housing includes a first structure and a second structure that are disposed opposite to each other. In this case, the plurality of optical fibers are located between the first structure and the second structure. During preparation of the optical fiber connector, the plurality of optical fibers may be first disposed on the first structure, and then the second structure covers a side that is of the plurality of optical fibers and that is away from the first structure.

A surface that is of at least one of the first structure and the second structure and that is close to the plurality of optical fibers is provided with a plurality of limiting grooves that are in one-to-one correspondence with the plurality of optical fibers, and the optical fibers are located in the corresponding limiting grooves. The limiting groove can limit the corresponding optical fiber to a fixed position in the housing, so that the optical fiber does not slide in the housing. After the second structure covers the side that is of the plurality of optical fibers and that is away from the first structure, glue is injected between the first structure and the second structure from a gap between the first structure and the second structure. The glue may flow from two ends to the middle along the limiting groove, so that the gap between the first structure and the second structure can be filled under a siphon effect. After curing, the glue can fasten the first structure, the second structure, and the plurality of optical fibers together. The plurality of optical fibers may be obtained after a coating layer of at least a part of a ribbon fiber section in the ribbon fiber is stripped and a grating is inscribed on an exposed optical fiber.

Optionally, when the housing includes the first structure and the second structure, and at least one of the first structure and the second structure is provided with the plurality of limiting grooves, the housing may have cavities corresponding to m optical fibers in the plurality of optical fibers, where m≥1. For the cavity and the limiting groove corresponding to one of the m optical fibers, the cavity is connected to the limiting groove, the optical fiber passes through the cavity, and in a radial direction of the optical fiber, a size of the cavity is greater than a size of the limiting groove.

When m is greater than 1, different optical fibers in the m optical fibers may correspond to a same cavity or different cavities. For example, the m optical fibers correspond to a same cavity. This is not limited in this application.

It can be learned from the foregoing content that when the housing includes the first structure and the second structure, during preparation of the optical fiber connector, the glue flows between the first structure and the second structure along the limiting groove by a siphon action, to fill between the first structure and the second structure. When the glue flows into a cavity, the glue leaks into the cavity, and blocks flowing caused by the siphon effect. Therefore, an amount of glue covering a grating in an optical fiber corresponding to the cavity can be reduced, a contact area between the glue and the grating is reduced, impact of the glue on performance of the grating is reduced, and wavelength consistency (consistency of wavelength shift amounts of light reflection of different gratings when reflection wavelengths of the gratings shift due to external factors) and stability of the gratings are improved.

The at least one cavity in the housing may have a plurality of implementations.

For example, in an implementation, the m optical fibers in any optical fiber connector provided in this application include a first optical fiber, a part that is of the first optical fiber and that is enclosed by the housing is provided with a first grating, and at least a part of a region of the first grating is connected to a first cavity corresponding to the first optical fiber.

For another example, in another possible implementation, the m optical fibers in any optical fiber connector provided in this application include a second optical fiber, a part that is of the second optical fiber and that is enclosed by the housing is provided with a second grating, and the second grating is isolated from a second cavity corresponding to the second optical fiber. The second cavity may be located between the second grating and an edge of the second structure (or the first structure).

For another example, in still another possible implementation, the m optical fibers in any optical fiber connector provided in this application include both the first optical fiber and the second optical fiber. Alternatively, some optical fibers may be both the first optical fiber and the second optical fiber. The first optical fiber is provided with the first grating, the second optical fiber is provided with the second grating, the first optical fiber corresponds to the first cavity, and the second optical fiber corresponds to the second cavity.

It may be understood that regardless of an implementation used to implement the cavity, a shape of the cavity is not limited in this application. The cavity may be in a strip shape, an annular shape, a square shape, a spherical shape, an irregular shape, or the like. In an optional implementation, the cavities corresponding to the m optical fibers include at least one of an annular cavity and a strip cavity.

Optionally, when the housing includes the first structure and the second structure that are disposed opposite to each other, a surface that is of at least one of the first structure and the second structure in any optical fiber connector provided in this application and that is close to the plurality of optical fibers is provided with a hollow groove for forming the foregoing cavity (for example, the first cavity and/or the second cavity). In other words, the cavity in the housing may be formed by a hollow groove on the at least one structure. For example, each cavity may be formed by communicating a hollow groove on the first structure and a hollow groove on the second structure; or each cavity may be formed by a hollow groove on the first structure or a hollow groove on the second structure; or some cavities may be formed by hollow grooves on the first structure and hollow grooves on the second structure, and other cavities may be formed by hollow grooves on the first structure or hollow grooves on the second structure.

When the at least one cavity includes a cavity formed by communicating a first hollow groove on the first structure and a second hollow groove on the second structure, an orthographic projection of the first hollow groove on a reference plane overlap an orthographic projection of the second hollow groove on the reference plane, and the reference plane is perpendicular to an arrangement direction of the first structure and the second structure. Certainly, the orthographic projection of the first hollow groove on the reference plane and the orthographic projection of the second hollow groove on the reference plane may not completely overlap, but partially overlap. This is not limited in this application. When the orthographic projection of the first hollow groove on the reference plane at least partially overlaps the orthographic projection of the second hollow groove on the reference plane, at least a part of a region of an optical fiber in the optical fiber connector is in a suspended state. In this case, at least a part of a region of a grating may be in a suspended state or may not be in a suspended state.

Further, in any optical fiber connector provided in this application, the end faces at both ends of the optical fibers may include at least one of a first-type end face and a second-type end face. The first-type end face protrudes from a surface of the housing, and the second-type end face is flush with the surface of the housing.

When the end faces at both ends of the optical fibers are second-type end faces, during manufacturing of the optical fiber connector, after the optical fiber is placed inside the housing, a part that is of the optical fiber and that protrudes from the housing may be removed, and then both ends of the optical fiber may be polished. Alternatively, an unnecessary part of the optical fiber is first removed (two ends of a remaining part of the optical fiber may be polished), and then the optical fiber is placed inside the housing. In addition, when the end faces at both ends of the optical fiber are second-type end faces, a structure of the optical fiber connector is compact, and this facilitates batch production. In addition, the optical fiber is completely enclosed in the housing, and the optical fiber is not easily broken. Therefore, reliability of the optical fiber is greatly improved, and this facilitates reuse of the optical fiber connector. In addition, when the end faces at both ends of the optical fiber are second-type end faces, both end faces of the optical fiber can be easily connected to an external device. Therefore, the optical fiber connector can be used to cascade a plurality of external devices, so that the optical fiber connector has better function scalability.

Optionally, when the end faces at both ends of the optical fiber include a first-type end face (for example, the end faces at both ends include one first-type end face or two first-type end faces), on a side on which the first-type end face of the optical fiber is located, the first structure may protrude from the second structure, or the second structure protrudes from the first structure.

Further, any optical fiber connector provided in this application may further include an optical waveguide. The optical waveguide is located on a surface that is of one of the first structure and the second structure and that is close to the plurality of optical fibers. The optical waveguide has a first port and a plurality of second ports, the first port is connected to all of the plurality of second ports, and the plurality of second ports are coupled to the plurality of optical fibers in one-to-one correspondence. The optical waveguide plays a role of an optical splitter, and can split light input from the first port into a plurality of channels of light and transmit the plurality of channels of light to the plurality of optical fibers through the plurality of second ports. It can be learned that the optical fiber connector provided in this application further has a function of an optical splitter.

In addition, in the plurality of second ports, some second ports may be connected to optical fibers in one-to-one correspondence, and other second ports are not connected to optical fibers. Alternatively, in the plurality of optical fibers, only some optical fibers are connected to the second ports in one-to-one correspondence, and other optical fibers are not correspondingly connected to second ports. It can be learned that at least a part of the plurality of second ports are coupled to at least a part of the plurality of optical fibers in one-to-one correspondence.

When the optical fiber connector includes the optical waveguide, the optical waveguide may be formed on the first structure or the second structure during preparation of the optical fiber connector. In addition, a sequence of forming the optical waveguide and providing the plurality of optical fibers on the first structure or the second structure is not limited.

In this application, when the plurality of optical fibers are connected to the optical waveguide, a grating is provided on the optical fiber, but no grating is provided on the optical waveguide. A cross section (which may be a circle) of the optical fiber that is perpendicular to an extension direction has a same size in all directions. Therefore, the optical fiber is polarization-independent. However, a cross section of the optical waveguide perpendicular to the extension direction does not have a same size in all directions. Therefore, the optical waveguide has polarization dependence rather than polarization independence. If the grating is provided on the optical waveguide, a reflection wavelength of the provided grating also has polarization dependence, and is not conducive to use in a case of a non-single-polarized optical signal. However, providing the grating on the optical fiber can avoid the polarization dependence, and improve universality of the optical fiber connector.

According to a second aspect, this application provides an optical splitter. The optical splitter includes any optical fiber connector that does not include an optical waveguide in the first aspect and an optical waveguide device. The optical waveguide device includes a splitter substrate and an optical waveguide located on the splitter substrate. The optical waveguide has a first port and a plurality of second ports, the first port is connected to all of the plurality of second ports, and the plurality of second ports are coupled to a plurality of optical fibers in the optical fiber connector in one-to-one correspondence. After an optical signal transmitted to the first port is split into a plurality of optical signals by the optical waveguide, the plurality of optical signals are respectively transmitted from the plurality of second ports to the plurality of optical fibers in the optical fiber connector, and are transmitted along the plurality of optical fibers. In addition, a grating on an optical fiber can further reflect an optical signal of a corresponding wavelength to identify the optical fiber. In addition, in this application, providing the grating on the optical fiber instead of the optical waveguide can avoid polarization dependence of the grating, and improve performance of the optical splitter including the optical fiber connector.

### BRIEF DESCRIPTION OF DRAWINGS

FIG. 1 is a diagram of a first optical fiber connector according to this application;
FIG. 2 is a diagram of a second optical fiber connector according to this application;
FIG. 3 is a diagram of a cross section that is perpendicular to the first structure in the optical fiber connector shown in FIG. 1 and that is taken through an optical fiber;
FIG. 4 is a diagram of a third optical fiber connector according to this application;
FIG. 5 is a diagram of a first cavity according to this application;
FIG. 6 is a diagram of a second cavity according to this application;
FIG. 7 is a diagram of a first cavity and a second cavity according to this application;
FIG. 8 is a diagram of an optical waveguide according to this application; and
FIG. 9 is a diagram of an optical splitter according to this application.

### DESCRIPTION OF EMBODIMENTS

To make principles and technical solutions of this application clearer, the following further describes implementations of this application in detail with reference to the accompanying drawings.

An optical communication technology relies on an optical fiber to transmit an optical signal for communication. However, the optical fiber is vulnerable to damage. When the optical fiber is damaged, the optical fiber cannot effectively transmit the optical signal, and consequently, optical communication is affected to some extent. In addition, as a scale of an optical fiber network expands, maintenance and management become important and complex. Main requirements include learning degradation of optical fiber links for prevention, and more importantly, quickly and accurately responding to and locating a link fault, to provide a timely and effective after-sales service for a customer. Therefore, it is important to identify an optical fiber port to determine a degraded optical fiber.

In a related technology, gratings (for example, Bragg gratings) are provided on a plurality of optical fibers in a ribbon fiber (a ribbon optical fiber), and wavelengths of optical signals reflected by gratings on different optical fibers are different. To identify ports of the plurality of optical fibers (a plurality of optical fiber ports), optical signals of a plurality of wavelengths may be transmitted to the optical fibers through a wavelength-tunable optical time domain reflectometer (optical time domain reflectometer, OTDR). Then, optical signals reflected by the gratings on the optical fibers are received from the ports, to identify the ports of the optical fibers based on wavelengths of the received optical signals. When an optical fiber is damaged, an optical signal sent by the OTDR cannot be transmitted to a grating on the optical fiber, and therefore, the OTDR cannot receive an optical signal reflected by the grating. Therefore, it may be determined that the optical fiber is damaged, and a port fault of the optical fiber is determined, to complete detection of optical fiber damage.

It can be learned from the foregoing content that, to identify an optical fiber port, a grating needs to be provided on an optical fiber. In a related technology, a protective layer and a coating layer of the ribbon fiber may be stripped in sequence to expose a plurality of bare fibers (optical fibers that are not wrapped and/or coated with another material) in the ribbon fiber, and a grating is inscribed on the bare fiber. After grating inscription, the grating is coated with a coating layer used to preliminarily protect the grating. After annealing, the grating is packaged by using a packaging box, to achieve protection effect of pressure resistance and drop resistance.

It can be learned that in a related technology, a procedure of stripping the ribbon fiber (for example, sequentially stripping the protective layer and the coating layer of the ribbon fiber), grating photolithography, coating the coating layer, annealing, and packaging the grating with the packaging box needs to be performed on the ribbon fiber. However, this process has a low automation level and strong manual dependency. In addition, coating layer coating and annealing processes and the grating photolithography process are performed in different places, so that the entire procedure is discontinuous, and completion efficiency of the procedure is affected. In addition, long time is required for annealing, and completion efficiency is further affected.

Further, in application, the ribbon fiber may be connected to a planar lightwave circuit (planar lightwave circuit, PLC) device. Therefore, generally, after the foregoing procedure is completed, a fiber array (fiber array, FA) unit needs to be processed at one end of the ribbon fiber, so that the ribbon fiber is connected to the planar lightwave circuit (planar lightwave circuit, PLC) device through the FA unit. However, it is inconvenient to coil the ribbon fiber with the foregoing packaging box in a subsequent manufacturing process of the FA unit, and an operation worker needs to pay special attention for protection. Therefore, manufacturing efficiency of the FA unit is reduced, and manufacturing costs of the FA unit are increased.

This application provides an optical fiber connector. The optical fiber connector may be an FA unit, or may not be an FA unit (for example, is a multi push on (multi push on, MPO) connector). An optical fiber in the optical fiber connector is provided with a grating, to avoid a problem of low efficiency caused by preparing and packaging the grating in a process other than preparation of the optical fiber connector.

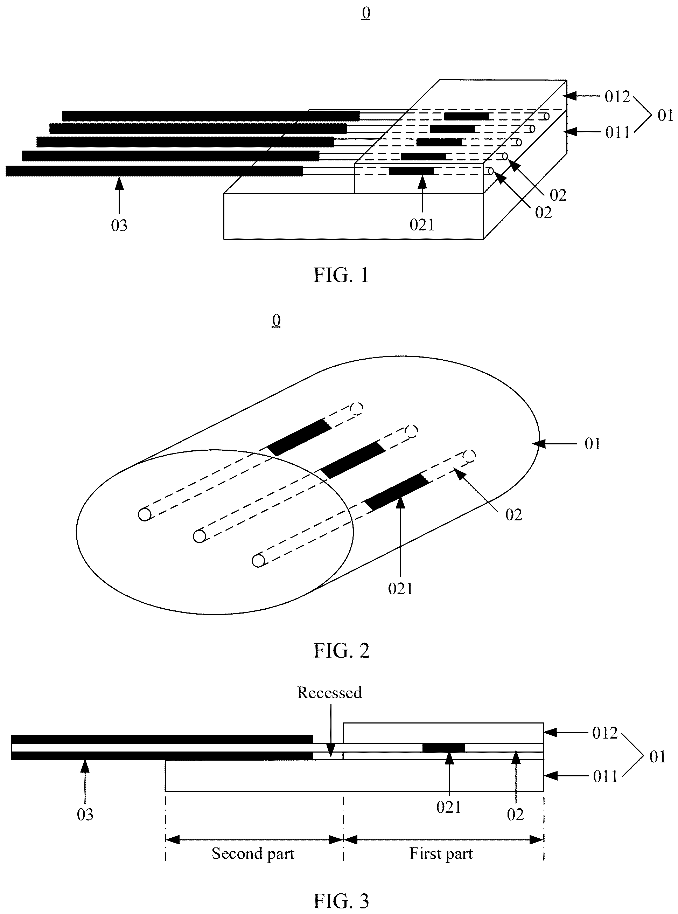

For example, as shown in FIG. 1, an optical fiber connector 0 provided in this application includes a housing 01 and a plurality of optical fibers 02 arranged in parallel. The housing 01 encloses the plurality of optical fibers 02, and end faces at both ends of the optical fibers 02 are exposed outside the housing 01, so that the plurality of optical fibers 02 are connected to a device outside the optical fiber connector as required. The optical fiber 02 in this application may be a bare fiber, or may not be a bare fiber. This is not limited in this application.

A part that is of at least one of the plurality of optical fibers 02 and that is enclosed by the housing 01 is provided with a grating 021, and when the at least one optical fiber 02 includes at least two optical fibers 02, gratings 021 on the at least two optical fibers 02 are different from each other. Because gratings 021 on different optical fibers 02 are different, the gratings 021 on the optical fibers 02 can identify the optical fibers 02. Different gratings 021 may identify, by reflecting light of different wavelengths, different optical fibers 02 on which the different gratings 021 are located.

It can be learned from the foregoing content that in this application, a grating on at least one optical fiber is provided on a part that is of the optical fiber and that is enclosed by the optical fiber connector. During preparation of the optical fiber connector, a process of stripping the optical fiber and packaging the connector with the housing needs to be performed. Therefore, grating preparation and optical fiber grating packaging protection can be implemented synchronously during preparation of the optical fiber connector, to avoid a problem of low efficiency caused by optical fiber stripping and grating packaging in a process other than preparation of the optical fiber connector.

In addition, when the at least one optical fiber includes the plurality of optical fibers, it is not necessary to provide a grating on a part outside the optical fiber connector, and it is not necessary to provide a packaging box on a ribbon fiber to protect the gratings on the optical fibers. Therefore, the grating packaging box does not affect preparation efficiency of the optical fiber connector. In addition, an automation level of preparing the optical fiber connector is usually higher than an automation level of preparing and packaging the gratings on the ribbon fiber. Therefore, manual dependency can be reduced. It can be learned that the optical fiber connector provided in this application has a similar function as an assembly including an optical fiber connector and a ribbon fiber with a grating in the related technology. However, the preparation efficiency of the optical fiber connector in this application is higher than preparation efficiency of the assembly including the optical fiber connector and the ribbon fiber with a grating in the related technology, and preparation costs of the optical fiber connector in this application are lower than preparation costs of the assembly including the optical fiber connector and the ribbon fiber with a grating in the related technology.

In FIG. 1, an example in which the plurality of optical fibers 02 include five optical fibers 02 arranged on a same plane, and a part that is of each optical fiber 02 and that is enclosed by the housing 01 is provided with a grating 021 is used. It may be understood that the plurality of optical fibers 02 may not be arranged on a same plane, and the plurality of optical fibers 02 may be arranged in an array or may not be arranged in an array. A quantity of optical fibers 02 is not limited in this application (in FIG. 1, the five optical fibers 02 are used as an example, and the quantity of optical fibers 02 may not be five, for example, the quantity may be eight or nine). In this application, alternatively, parts that are of some optical fibers 02 and that are enclosed by the housing 01 are provided with gratings 021, and parts that are of other optical fibers 02 and that are enclosed by the housing 01 are not provided with gratings 021. This is not limited in this application. All or a part of a region of the part that is of the optical fiber 02 and that is enclosed by the housing 01 is provided with a grating 021. In the accompanying drawings, an example in which a part of the region of the part is provided with a grating 021 is used.

In addition, the housing 01 may also have a plurality of implementations. For example, in FIG. 1, the housing 01 includes a first structure 011 and a second structure 012 that are disposed opposite to each other. In this case, the plurality of optical fibers 02 are located between the first structure 011 and the second structure 012. When the housing 01 includes the first structure 011 and the second structure 012, during preparation of the optical fiber connector 0, the plurality of optical fibers 02 may be first disposed on the first structure 011, and then the second structure 012 covers a side that is of the plurality of optical fibers 02 and that is away from the first structure 011. At least one of the first structure 011 and the second structure 012 is a substrate. For example, both the first structure 011 and the second structure 012 are substrates (the first structure 011 is a first substrate, and the second structure 012 is a second substrate); or the first structure 011 is a substrate, and the second structure 012 is an adhesive layer.

A size relationship between areas of surfaces that are of the first structure 011 and the second structure 012 and that are close to the optical fibers is not limited in this application. In FIG. 1, an example in which an area of a surface that is of the first structure 011 and that is close to the optical fibers is greater than an area of a surface that is of the second structure 012 and that is close to the optical fibers is used. Alternatively, the area of the surface that is of the first structure 011 and that is close to the optical fibers is less than or equal to the area of the surface that is of the second structure 012 and that is close to the optical fibers.

A surface that is of at least one of the first structure 011 and the second structure 012 and that is close to the plurality of optical fibers 02 is provided with a plurality of limiting grooves (not shown in FIG. 1) that are in one-to-one correspondence with the plurality of optical fibers 02, and the optical fibers 02 are located in the corresponding limiting grooves. The limiting groove can limit the corresponding optical fiber 02 to a fixed position in the housing 01, so that the optical fiber 02 does not slide in the housing 01.

When at least one of the first structure 011 and the second structure 012 is provided with the plurality of limiting grooves, after the second structure 012 covers the side that is of the plurality of optical fibers 02 and that is away from the first structure 011, glue is injected between the first structure 011 and the second structure 012 from a gap between the first structure 011 and the second structure 012. The glue may flow from two ends to the middle along the limiting groove, so that the gap between the first structure 011 and the second structure 012 can be filled under a siphon effect. After curing, the glue can fasten the first structure 011, the second structure 012, and the plurality of optical fibers 02 together. The plurality of optical fibers 02 may be obtained after a coating layer of at least a part of a ribbon fiber section in the ribbon fiber is stripped and a grating is inscribed on an exposed optical fiber.

The limiting groove is a strip groove, and a length direction is parallel to the corresponding optical fiber 02. A cross section that is of the limiting groove and that is perpendicular to the length direction may be V-shaped, semi-circle, rectangular, or the like. A shape of the cross section is not limited in this application. A distance between centers of adjacent limiting grooves may be greater than a diameter of the optical fiber 02. For example, the distance between centers of adjacent limiting grooves is greater than 125 micrometers. A depth of the limiting groove may be any depth. For example, the depth may be greater than 62.5 micrometers.

It may be understood that the housing 01 may also have another implementation different from the implementation shown in FIG. 1. For example, as shown in FIG. 2, the housing 01 may not be divided into the first structure 011 and the second structure 012, but is an integrated component. In addition, the housing 01 is provided with a plurality of through holes (not shown in FIG. 2) for inserting the plurality of optical fibers 02, the plurality of optical fibers 02 are in one-to-one correspondence with the plurality of through holes, and the optical fibers 02 are inserted into the corresponding through holes.

Still refer to FIG. 1. The optical fiber connector 0 may further include a plurality of coating layers 03 that are in one-to-one correspondence with the plurality of optical fibers 02. The coating layer 03 is located outside the housing 01, and the coating layer 03 is wrapped around one end of the corresponding optical fiber 02. Optionally, the optical fiber connector 0 may further include a plurality of protective layers (not shown in the figure) that are in one-to-one correspondence with the plurality of optical fibers 02, and the protective layers corresponding to the optical fibers 02 are wrapped around the coating layers 03 corresponding to the optical fibers 02. It may be understood that the optical fiber connector 0 may not include the plurality of coating layers 03 or the plurality of protective layers. This is not limited in this application.

Optionally, FIG. 3 is a diagram of a cross section that is perpendicular to the first structure 011 in the optical fiber connector 0 shown in FIG. 1 and that is taken through an optical fiber 02. In FIG. 3, the first structure 011 includes a first part and a second part that are arranged in direction from one end to the other end of the optical fiber 02. A surface that is of the first part and that is close to the plurality of optical fibers 02 is provided with the plurality of limiting grooves, and a surface that is of the second part and that is close to the plurality of optical fibers 02 is recessed relative to the surface that is of the first part and that is close to the plurality of optical fibers 02. In this way, although one end of the optical fiber 02 is wrapped with the coating layer 03, the end of the optical fiber 02 wrapped with the coating layer 03 may be placed on the surface of the second part that is close to the optical fiber 02. Because the surface is recessed relative to the surface that is of the first part and that is close to the optical fiber 02, the optical fiber 02 can be kept in a natural straightening state, to avoid bending of the optical fiber 02 (or to reduce a bending degree of the optical fiber 02), and reduce a risk of breaking the optical fiber 02 due to bending.

Optionally, in a direction perpendicular to the first structure 011, a distance between a central axis of the optical fiber 02 and a surface that is of the first part that is away from the optical fiber 02 is the same as a distance between a central axis of the optical fiber 02 and a surface that is of the second part and that is away from the optical fiber 02. In this case, a surface that is of the first structure 011 and that is away from the optical fiber 02 is parallel to the central axis of the optical fiber 02.

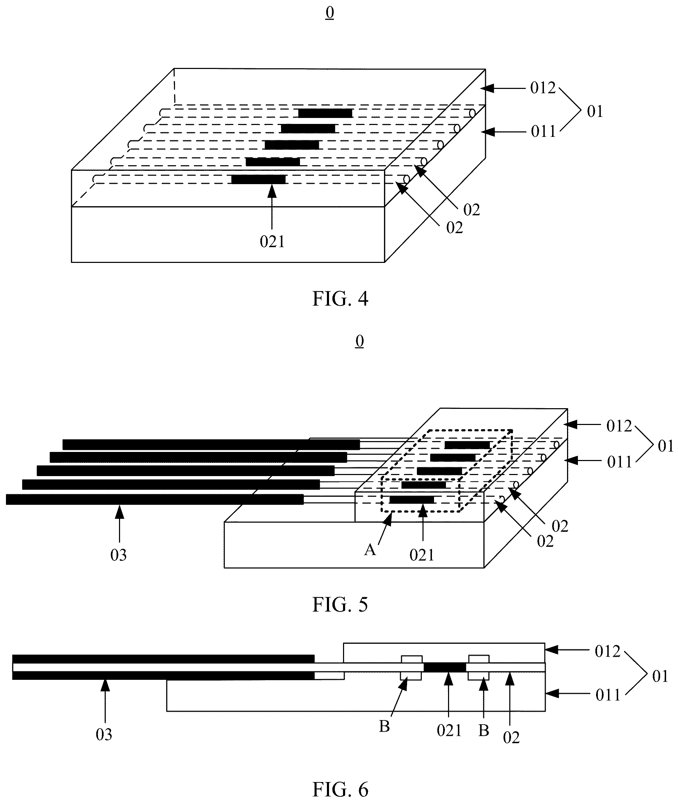

Further, in any optical fiber connector provided in this application, the end faces at both ends of the optical fibers 02 may include at least one of a first-type end face and a second-type end face. The first-type end face protrudes from a surface of the housing 01 (for example, a left end face of the optical fiber 02 in FIG. 1), and the second-type end face is flush with a surface of the housing 01 (for example, a right end face of the optical fiber 02 in FIG. 1). In FIG. 1, an example in which one of the end faces at both ends of the optical fiber 02 is a first-type end face, and the other end face is a second-type end face is used. It may be understood that the end faces at both ends of the optical fiber 02 may be first-type end faces or second-type end faces. When the end faces at both ends of the optical fiber 02 are second-type end faces, the optical fiber connector may be shown in FIG. 2 or FIG. 4.

When the end faces at both ends of the optical fiber 02 are second-type end faces, during manufacturing of the optical fiber connector, after the optical fiber is placed inside the housing 01, a part that is of the optical fiber and that protrudes from the housing 01 may be removed, and then both ends of the optical fiber may be polished. Alternatively, an unnecessary part of the optical fiber is first removed (two ends of a remaining part of the optical fiber may be polished), and then the optical fiber is placed inside the housing 01.

In addition, when the end faces at both ends of the optical fiber 02 are second-type end faces, a structure of the optical fiber connector is compact, and this facilitates batch production. In addition, the optical fiber 02 is completely enclosed in the housing 01, and the optical fiber 02 is not easily broken. Therefore, reliability of the optical fiber 02 is greatly improved, and this facilitates reuse of the optical fiber connector. In addition, when the end faces at both ends of the optical fiber 02 are second-type end faces, both end faces of the optical fiber 02 can be easily connected to an external device. Therefore, the optical fiber connector can be used to cascade a plurality of external devices, so that the optical fiber connector has better function scalability.

Optionally, when the end faces at both ends of the optical fiber 02 include a first-type end face (for example, the end faces at both ends include one first-type end face or two first-type end faces), the first structure 011 protrudes from the second structure 012 on a side on which the first-type end face of the optical fiber 02 is located. As shown in FIG. 1, the left end face of the optical fiber is a first-type end face. Therefore, the first structure 011 protrudes from the second structure 012 on the left. It may be understood that, on the side on which the first-type end face of the optical fiber 02 is located, the first structure 011 may not protrude from the second structure 012. For example, on the side on which the first-type end face is located, the first structure 011 is flush with the second structure 012, or the second structure 012 protrudes from the first structure 011. This is not limited in this application.

Optionally, when the housing includes the first structure and the second structure, and at least one of the first structure and the second structure is provided with the plurality of limiting grooves, the housing may have cavities (not shown in FIG. 1) corresponding to m optical fibers in the plurality of optical fibers, where M≥1. When m is greater than 1, different optical fibers in the m optical fibers may correspond to a same cavity or different cavities. For example, the m optical fibers correspond to a same cavity. This is not limited in this application. The m optical fibers may be all or some of the optical fibers in the optical fiber connector. The m optical fibers may be the same as or different from the at least one optical fiber provided with a grating. When the housing has a plurality of cavities, the plurality of cavities are isolated from each other. For a cavity and a limiting groove corresponding to one of the m optical fibers, the cavity is connected to the limiting groove, the optical fiber passes through the cavity, and in a radial direction of the optical fiber, a size of the cavity is greater than a size of the limiting groove.

It can be learned from the foregoing content that when the housing includes the first structure and the second structure, during preparation of the optical fiber connector, the glue flows between the first structure and the second structure along the limiting groove by a siphon action, to fill between the first structure and the second structure. When the glue flows into a cavity, the glue leaks into the cavity, and blocks flowing caused by the siphon effect. Therefore, an amount of glue covering a grating in an optical fiber corresponding to the cavity can be reduced, a contact area between the glue and the grating is reduced, impact of the glue on performance of the grating is reduced, and wavelength consistency (consistency of wavelength shift amounts of light reflection of different gratings when reflection wavelengths of the gratings shift due to external factors) and stability of the gratings are improved.

It may be understood that there may be no cavity inside the housing 01. In this case, the glue may cover the grating, and the glue may be in full and even contact with the grating. This is not limited in this application.

The at least one cavity in the housing 01 may have a plurality of implementations.

For example, in an implementation, refer to FIG. 5, the m optical fibers in any optical fiber connector provided in this application include a first optical fiber (all optical fibers in FIG. 5 are first optical fibers), a part that is of the first optical fiber and that is enclosed by the housing is provided with a first grating (for example, a grating 021 in FIG. 5), and at least a part of a region of the first grating is connected to a first cavity A corresponding to the first optical fiber. In FIG. 5, an example in which the plurality of optical fibers 02 are all first optical fibers, all the first optical fibers correspond to the first cavity A, and all region in the first grating in each first optical fiber is connected to the first cavity A is used. It may be understood that some of the plurality of optical fibers 02 may also be first optical fibers, and the other of the optical fibers 02 are not first optical fibers. In addition, in each first optical fiber, a part of a region of the first grating is connected to the first cavity A corresponding to the first optical fiber, and the other part of the region is isolated from the first cavity A corresponding to the first optical fiber. There may be one first cavity A or a plurality of first cavities A in the housing 01. Different first optical fibers may correspond to a same first cavity A or different first cavities A. In FIG. 5, an example in which all first optical fibers correspond to one first cavity A is used. This is not limited in this application. The first cavity A in the housing 01 in FIG. 5 is in a square shape. It may be understood that the first cavity A may also be in another shape, such as a spherical shape or an irregular shape.

For another example, in another possible implementation, refer to FIG. 6. The m optical fibers in any optical fiber connector provided in this application include a second optical fiber (each optical fiber 02 shown in FIG. 6), a part that is of the second optical fiber and that is enclosed by the housing is provided with a second grating (each grating 021 shown in FIG. 6), and the second grating is isolated from a second cavity B corresponding to the second optical fiber. The second cavity B may be located between the second grating and an edge of the second structure (or the first structure). There may be one second cavity B or a plurality of second cavities B in the housing 01. In FIG. 6, two second cavities B are used as an example. This is not limited in this application. The second cavity B in FIG. 6 is a strip cavity, and a length direction of the strip cavity is perpendicular to the optical fiber 02. The two second cavities B in FIG. 6 may be arranged in parallel on two sides of the gratings 021 on the plurality of optical fibers 02. It may be understood that the second cavity B may not be a strip cavity. For example, the second cavity B is an annular cavity, and the annular cavity may encircle the second grating (for example, the annular cavity encircles the gratings 021 on the plurality of optical fibers 02). When the second cavity B is a strip cavity, the length direction of the second cavity B may not be perpendicular to the optical fiber 02. Different second optical fibers may correspond to a same second cavity B or different second cavities B. In FIG. 6, an example in which the second optical fibers each correspond to the two second cavities B is used.

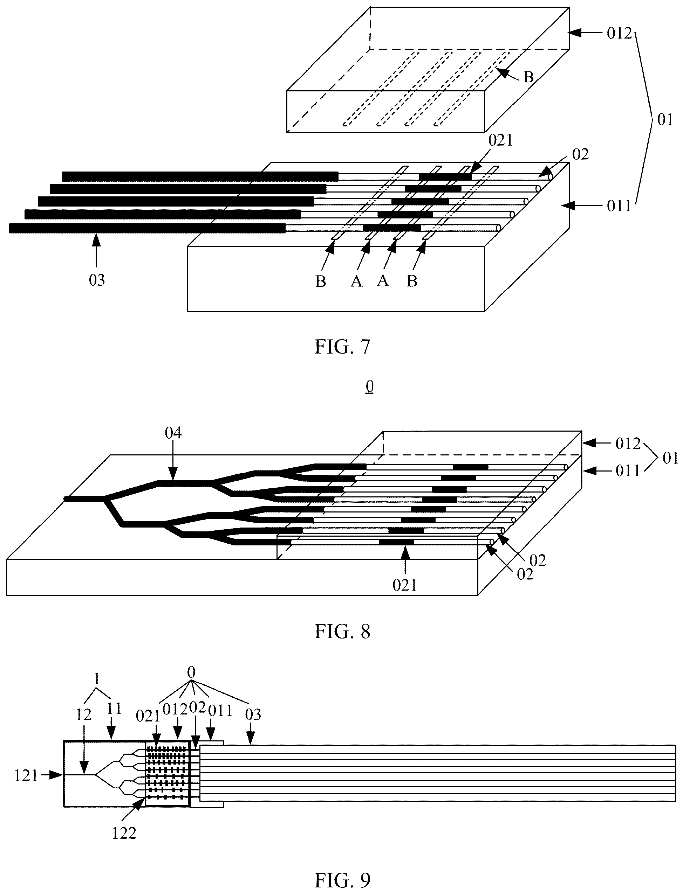

For another example, in still another possible implementation, the m optical fibers in any optical fiber connector provided in this application include both the first optical fiber and the second optical fiber. The first optical fiber is provided with the first grating, the second optical fiber is provided with the second grating, the first optical fiber corresponds to the first cavity, and the second optical fiber corresponds to the second cavity. Certainly, refer to FIG. 7. Some optical fibers may be both a first optical fiber and a second optical fiber. In FIG. 7, an example in which all optical fibers 02 are both a first optical fiber and a second optical fiber is used, and each optical fiber 02 corresponds to all first cavities A and all second cavities B. Certainly, different optical fibers 02 may also correspond to different first cavities A and/or different second cavities B. In addition, there may be one or more first cavities A, and there may be one or more second cavities B. In FIG. 7, an example in which there are a plurality of first cavities A and a plurality of second cavities B is used. This is not limited in this application.

It may be understood that regardless of an implementation used to implement the cavity, a shape of the cavity is not limited in this application. The cavity may be in a strip shape, an annular shape, a square shape, a spherical shape, an irregular shape, or the like. In an optional implementation, the cavities corresponding to the m optical fibers include at least one of an annular cavity and a strip cavity. Certainly, the cavity in the housing 01 may not be an annular cavity or a strip cavity. This is not limited in this application. A size of the cavity is not limited in this application. For example, a width range of the strip cavity may be 0.1 millimeters to 10 millimeters. In addition, a shape of any cross section of the cavity may be any shape such as a rectangle, a trapezoid, or a triangle. This is not limited in this application either. In addition, when the at least one cavity includes a plurality of cavities, shapes and/or sizes of different cavities may be the same or may be different.

Optionally, when the housing 01 includes the first structure 011 and the second structure 012 that are disposed opposite to each other, a surface that is of at least one of the first structure 011 and the second structure 012 in any optical fiber connector provided in this application and that is close to the plurality of optical fibers 02 is provided with a hollow groove (not shown in the figure) for forming the foregoing cavity (for example, the first cavity A and/or the second cavity B). In other words, the cavity in the housing 01 may be formed by a hollow groove on the at least one structure.

For example, each cavity may be formed by communicating a hollow groove on the first structure 011 and a hollow groove on the second structure 012; or each cavity may be formed by a hollow groove on the first structure 011 or a hollow groove on the second structure 012; or some cavities may be formed by hollow grooves on the first structure 011 and hollow grooves on the second structure 012, and other cavities may be formed by hollow grooves on the first structure 011 or hollow grooves on the second structure 012.

When the at least one cavity includes a cavity formed by communicating a first hollow groove on the first structure 011 and a second hollow groove on the second structure 012, an orthographic projection of the first hollow groove on a reference plane overlap an orthographic projection of the second hollow groove on the reference plane, and the reference plane is perpendicular to an arrangement direction of the first structure 011 and the second structure 012. Certainly, the orthographic projection of the first hollow groove on the reference plane and the orthographic projection of the second hollow groove on the reference plane may not completely overlap, but partially overlap. This is not limited in this application. When the orthographic projection of the first hollow groove on the reference plane at least partially overlaps the orthographic projection of the second hollow groove on the reference plane, at least a part of a region of an optical fiber in the optical fiber connector is in a suspended state.

Optionally, for any one of the first structure 011 and the second structure 012, when there are both a limiting groove and a hollow groove in the structure, a depth of the limiting groove may be the same as or different from a depth of the hollow groove. For example, the depth of the limiting groove is less than, greater than, or equal to the depth of the hollow groove. When both the first structure 011 and the second structure 012 are provided with hollow grooves, a depth of a hollow groove on the first structure 011 may be the same as or different from a depth of a hollow groove on the second structure 012. In addition, for any structure, there may be one or more hollow grooves in the structure, and shapes and sizes of different hollow grooves may be the same or may be different.

In addition, the cavity in the housing 01 may be connected to the outside of the housing 01, or may not be connected to the outside of the housing 01. This is not limited in this application. In the accompanying drawings, an example in which the cavity is not connected to the outside of the housing 01 is used. For example, when the cavity is connected to the outside of the housing 01, the cavity may be in communication with at least one side of the housing 01 in a first direction. The first direction is perpendicular to the arrangement direction of the first structure 011 and the second structure 012, and is perpendicular to the length direction of the optical fiber 02.

Further, as shown in FIG. 8, any optical fiber connector provided in this application may further include an optical waveguide 04. The optical waveguide 04 is located on a surface that is of one of the first structure 011 and the second structure 012 (the first structure 011 is used as an example in FIG. 8) and that is close to the plurality of optical fibers 02. The optical waveguide 04 has a first port 041 and a plurality of second ports 042 (in FIG. 8, one first port 041 and eight second ports 042 are used as an example, and there may also be a plurality of first ports 041). The first port 041 is connected to all of the plurality of second ports 042, and the plurality of second ports 042 are coupled to the plurality of optical fibers 02 in one-to-one correspondence.

The optical waveguide 04 may be a planar lightwave circuit, or may be a stereoscopic lightwave circuit. This is not limited in this application. In FIG. 8, a planar lightwave circuit is used as an example. In addition, when the plurality of second ports 042 include eight second ports 042, wavelengths of optical signals reflected by eight gratings on eight optical fibers 02 that are in one-to-one correspondence with the eight second ports 042 may be respectively 1625 nanometers, 1626 nanometers, 1627 nanometers, 1628 nanometers, 1629 nanometers, 1630 nanometers, 1631 nanometers, and 1632 nanometers.

Optionally, the optical waveguide 04 may function as an optical splitter, and can split light input from the first port 041 into a plurality of channels of light and transmit the plurality of channels of light to the plurality of optical fibers 02 through the plurality of second ports 042. It can be learned that the optical fiber connector provided in this application may further have a function of an optical splitter.

It may be understood that the optical waveguide 04 may not function as an optical splitter. In addition, FIG. 8 shows only an example of the optical fiber connector. In the optical fiber connector in FIG. 8, one end that is of the optical fiber 02 and that is not connected to the optical waveguide 04 may be flush with the housing 01, or may protrude from the housing 01. When the end protrudes from the housing 01, the first structure 011 may protrude from the second structure 012 on a side on which the end is located. In addition, in FIG. 8, an example in which the optical waveguide 04 is disposed on the first structure 011 is used. It may be understood that the optical waveguide 04 may also be disposed on the surface that is of the second structure 012 and that is close to the optical fibers 02. This is not limited in this application.

In addition, in the plurality of second ports 042, some second ports 042 may be connected to optical fibers 02 in one-to-one correspondence, and other second ports 042 are not connected to optical fibers 02. Alternatively, in the plurality of optical fibers 02, only some optical fibers 02 are connected to the second ports 042 in one-to-one correspondence, and other optical fibers 02 are not correspondingly connected to second ports 042. It can be learned that at least a part of the plurality of second ports 042 are coupled to at least a part of the plurality of optical fibers 02 in one-to-one correspondence.

When the optical fiber connector includes the optical waveguide, the optical waveguide may be formed on the first structure or the second structure during preparation of the optical fiber connector. In addition, a sequence of forming the optical waveguide and providing the plurality of optical fibers on the first structure or the second structure is not limited.

In this application, when the plurality of optical fibers are connected to the optical waveguide, a grating is provided on the optical fiber, but no grating is provided on the optical waveguide. A cross section (which may be a circle) of the optical fiber that is perpendicular to an extension direction has a same size in all directions. Therefore, the optical fiber is polarization-independent. However, a cross section of the optical waveguide perpendicular to the extension direction does not have a same size in all directions. Therefore, the optical waveguide has polarization dependence rather than polarization independence. If the grating is provided on the optical waveguide, a reflection wavelength of the provided grating also has polarization dependence, and is not conducive to use in a case of a non-single-polarized optical signal. However, providing the grating on the optical fiber can avoid the polarization dependence, and improve universality of the optical fiber connector.

Optionally, when the housing includes the first structure and the second structure, the optical fiber connector may further include more structures similar to the first structure and the second structure. For example, the housing further includes a third structure (for example, a substrate or an adhesive layer), and there are a plurality of optical fibers between the second structure and the third structure. For the second structure, the third structure, and the plurality of optical fibers between the second structure and the third structure, refer to the first structure, the second structure, and the plurality of optical fibers between the first structure and the second structure. Details are not described herein in this application. In other words, the housing includes a plurality of layers of structures, and there are a plurality of optical fibers between every two adjacent layers of structures. For every two adjacent layers of structures and a plurality of optical fibers between the two layers of structures, refer to the first structure, the second structure, and the plurality of optical fibers between the first structure and the second structure.

The optical fiber connector provided in this application may be used in various optical components, optical modules, optical devices, and optical networks (for example, an optical distribution network (optical distribution network, ODN) and a passive optical network (passive optical network, PON)). For example, the optical fiber connector may be used in a fan-in and fan-out module of a multi-core or multi-mode optical fiber, and different fiber cores are identified by using gratings on optical fibers. For another example, the optical fiber connector may be used in an optical backplane (also referred to as an optical cross-connect (optical cross-connect, OXC) backplane), and is used to identify a multi-fiber port of the optical backplane.

The following provides descriptions by using an application of the optical fiber connector in an optical splitter as an example. For example, as shown in FIG. 9, the optical splitter provided in this application includes any optical fiber connector 0 without an optical waveguide provided in this application and an optical waveguide device 1. The optical waveguide device 1 includes a splitter substrate 11 and an optical waveguide 12 located on the splitter substrate 11. The optical waveguide 12 has a first port 121 and a plurality of second ports 122, the first port 121 is connected to all of the plurality of second ports 122, and the plurality of second ports 122 are coupled to the plurality of optical fibers 02 in the optical fiber connector 0 in one-to-one correspondence.

For a structure of the optical waveguide 12, refer to the structure of the optical waveguide 04. Details are not described herein in this application. In FIG. 9, an example in which the optical fiber connector 0 has a structure similar to that of the optical fiber connector 0 shown in FIG. 1 is used. It may be understood that the structure of the optical fiber connector 0 in FIG. 9 may also be a structure of another optical fiber connector that is provided in this application and that is different from the structure shown in FIG. 1.

In FIG. 9, after an optical signal transmitted to the first port 121 is split into a plurality of optical signals by the optical waveguide, the plurality of optical signals are respectively transmitted from a plurality of second ports 122 to the plurality of optical fibers 02 in the optical fiber connector 0, and are transmitted along the plurality of optical fibers 02. In addition, a grating 021 on an optical fiber 02 can further reflect an optical signal of a corresponding wavelength to identify the optical fiber 02.

In addition, in this application, providing the grating on the optical fiber instead of the optical waveguide can avoid polarization dependence of the grating, and improve performance of the optical splitter including the optical fiber connector.

In this application, "at least one" is one or more, and "a plurality of" is two or more. The terms "first", "second", and the like are merely used for a purpose of description, and cannot be understood as an indication or implication of relative importance.

It should be noted that, in the accompanying drawings, for illustration clarity, sizes of some or all layers or sizes of some or all regions may be enlarged. In addition, it may be understood that, when a layer is referred to as being "at" another layer, the layer may be directly on another layer, or there may be an intermediate layer. In addition, it may be understood that, when a layer is referred to as being "below" another layer, the layer may be directly below another layer, or there may be one or more intermediate layers. In addition, it may be further understood that, when a layer is referred to as being "between" two layers, the layer may be a unique layer between the two layers, or there may be one or more intermediate layers. Similar reference signs throughout this specification indicate similar layers. One film layer in this application may be a one-layer structure, or may be obtained by superposing a plurality of layers of structures. Materials of different layers of structures in the plurality of layers of structures may be the same or may be different.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In corresponding embodiments provided in this application, it should be understood that the disclosed structure may be implemented in other composition manners. For example, embodiments described above are merely examples.

The foregoing descriptions are merely optional implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. An optical fiber connector, wherein the optical fiber connector comprises a housing and a plurality of optical fibers arranged in parallel;
the housing encloses the plurality of optical fibers, and end faces at both ends of the optical fibers are exposed outside the housing; and
a part that is of at least one of the plurality of optical fibers and that is enclosed by the housing is provided with a grating, and when the at least one optical fiber comprises at least two optical fibers, gratings on the at least two optical fibers are different from each other.

2. The optical fiber connector according to claim 1, wherein the housing comprises a first structure and a second structure that are disposed opposite to each other, and the plurality of optical fibers are located between the first structure and the second structure; and
a surface that is of at least one of the first structure and the second structure and that is close to the plurality of optical fibers is provided with a plurality of limiting grooves that are in one-to-one correspondence with the plurality of optical fibers, and the optical fibers are located in the corresponding limiting grooves.

3. The optical fiber connector according to claim 2, wherein the housing has cavities corresponding to m optical fibers in the plurality of optical fibers, m≥1, and for the cavity and the limiting groove corresponding to one of the m optical fibers:
the cavity is connected to the limiting groove, the optical fiber passes through the cavity, and in a radial direction of the optical fiber, a size of the cavity is greater than a size of the limiting groove.

4. The optical fiber connector according to claim 3, wherein the m optical fibers comprise a first optical fiber, a part that is of the first optical fiber and that is enclosed by the housing is provided with a first grating, and at least a part of a region of the first grating is connected to a first cavity corresponding to the first optical fiber.

5. The optical fiber connector according to claim 3 or 4, wherein the m optical fibers comprise a second optical fiber, a part that is of the second optical fiber and that is enclosed by the housing is provided with a second grating, and the second grating is isolated from a second cavity corresponding to the second optical fiber.

6. The optical fiber connector according to any one of claims 3 to 5, wherein the cavities corresponding to the m optical fibers comprise at least one of an annular cavity and a strip cavity, and a length direction of the strip cavity is perpendicular to a length direction of the optical fiber.

7. The optical fiber connector according to any one of claims 3 to 6, wherein the surface that is of at least one of the first structure and the second structure and that is close to the plurality of optical fibers is provided with a hollow groove for forming the cavity.

8. The optical fiber connector according to claim 7, wherein the cavities corresponding to the m optical fibers comprise a cavity formed by connecting a first hollow groove on the first structure and a second hollow groove on the second structure.

9. The optical fiber connector according to claim 8, wherein an orthographic projection of the first hollow groove on a reference plane overlaps an orthographic projection of the second hollow groove on the reference plane, and the reference plane is perpendicular to an arrangement direction of the first structure and the second structure.

10. The optical fiber connector according to any one of claims 1 to 9, wherein the end faces at both ends of the optical fibers comprise at least one of a first-type end face and a second-type end face, the first-type end face protrudes from a surface of the housing, and the second-type end face is flush with the surface of the housing.

11. The optical fiber connector according to claim 10, wherein the housing comprises the first structure and the second structure that are disposed opposite to each other, the plurality of optical fibers are located between the first structure and the second structure, and the surface that is of at least one of the first structure and the second structure and that is close to the plurality of optical fibers is provided with the plurality of limiting grooves that are in one-to-one correspondence with the plurality of optical fibers, and the optical fibers are located in the corresponding limiting grooves; and
the end faces at both ends of the optical fibers comprise the first-type end face, and on a side on which the first-type end face of the optical fiber is located, the first structure protrudes from the second structure, or the second structure protrudes from the first structure.

12. The optical fiber connector according to any one of claims 1 to 11, wherein the housing comprises the first structure and the second structure that are disposed opposite to each other, the plurality of optical fibers are located between the first structure and the second structure, and the surface that is of at least one of the first structure and the second structure and that is close to the plurality of optical fibers is provided with the plurality of limiting grooves that are in one-to-one correspondence with the plurality of optical fibers, and the optical fibers are located in the corresponding limiting grooves; and
the optical fiber connector further comprises an optical waveguide, wherein the optical waveguide is located on the surface that is of the first structure or the second structure and that is close to the plurality of optical fibers, the optical waveguide has a first port and a plurality of second ports, the first port is connected to all of the plurality of second ports, and at least a part of the second ports are coupled to at least a part of the optical fibers in one-to-one correspondence.

13. An optical splitter, comprising the optical fiber connector according to any one of claims 1 to 11 and an optical waveguide device, wherein
the optical waveguide device comprises a splitter substrate, and an optical waveguide located on the splitter substrate, wherein the optical waveguide has a first port and a plurality of second ports, the first port is connected to all of the plurality of second ports, and the plurality of second ports are coupled to a plurality of optical fibers in the optical fiber connector in one-to-one correspondence.
